# EUROPÄISCHE PATENTSCHRIFT

(11) **EP 2 241 765 B1**
(45) Veröffentlichungstag und Bekanntmachung des Hinweises auf die Patenterteilung: **09.10.2013**
(21) Anmeldenummer: 09005477.6
(22) Anmeldetag: 17.04.2009
(51) Int. Cl.: F15B 13/08, F16K 27/00

(54) **Ventilbatterie mit CAN-Bus Umlaufventil**
Valve island with CAN-bus bleed-off valve
Batterie de soupape dotée d'une soupape de dérivation à bus CAN

(43) Veröffentlichungstag der Anmeldung: 20.10.2010
(73) Patentinhaber: HAWE Hydraulik SE, 81673 München (DE)
(72) Erfinder: Heusser, Martin, Dipl.-Ing., 81245 München (DE); Scheubert, Peter, Dr., 85653 Aying (DE); Sabatier, Jean Michel, 85560 Ebersberg (DE)
(74) Vertreter: Grünecker, Kinkeldey, Stockmair & Schwanhäusser

(56) Entgegenhaltungen:
- WO-A-2005/059413
- DE-B3-102004 028 437
- "Funktionale Sicherheit von Maschinensteuerungen. Anwendungen der DIN EN ISO 13849" BGIA REPORT, DEUTSCHE GESETZLICHE UNFALLVERSICHERUNG, DE, 1. Februar 2008 (2008-02-01), Seiten 1-3,131, XP007910087
- "INSTRUCTIONS - ELECTRICAL ACTUATING MODULE PVED-CC SERIES 4 FOR PVG 32" INSTRUCTIONS - SAUER-DANFOSS, November 2005 (2005-11), Seiten 1-8, XP007910180

## Beschreibung

Die Erfindung betrifft eine Hydraulik-Ventilbatterie gemäß Oberbegriff des Patentanspruchs 1.

Bekannter Standard (z.B.: Instruktionen der Firma SAUER DANFOSS, 11/2005, "PVED-CC Series 4 for PVG 32", Nr. 157R9960, www.sauer-danfoss.com) solcher Ventilbatterien ist es, die Verkabelung zur jeweiligen, in der Sektion enthaltenen Ventilelektronik mit Einzelkabeln zu gestalten, wobei die jeweilige, in der Sektion enthaltene Aktorik und/oder Sensorik mit Steckverbindern angeschlossen wird. Bei einer Ventilbatterie mit vier Sektionen liegen z.B. acht Steckverbindungen und entsprechend viele Kabelschlaufen vor. Nach einem Daisy-Chain-Verfahren werden die nebeneinander liegenden Sektionen jeweils über die Leistungs- Versorgungsschleifen und Signal-Kabelschleifen eines Buskabels (CAN Bus) verbunden. An jeder Sektion sind demzufolge zumindest zwei Steckverbinder anzubringen. Der Kostenaufwand für die Vorbereitung und Anbringung der vielen Kabelschleifen und Steckverbinder ist hoch. Schwerwiegend ist jedoch der Nachteil, dass die Steckverbinder relativ viel Platz benötigen, der speziell bei kleineren Bauformen kaum gegeben ist, was das Anbringen und Abnehmen der Steckverbinder erschwert. Außerdem besteht die Gefahr, dass beispielsweise auf dem Gebiet der Mobilhydraulik unter groben Einsatzbedingungen Steckverbinder und/oder Kabelschleifen zwischen den Steckverbindern beschädigt oder losgerissen werden.

Für Industrieanwendungen ist es in Innenräumen mit stationären Vorrichtungen üblich, Busleitungen als beispielsweise zweiadrige kodierte Kabel zu verlegen. Wenn es in solchen Fabrikationsstätten vor allem auf einen hohen Freiheitsgrad zu jederzeitigen Erweiterung oder Einschränkung oder Umgestaltung verknüpfter Vorrichtungen ankommt, so ist eine Ausführung der Verkabelung z.B. Beispiel in Form des sogenannten ASI Busystems etabliert (Informationsschrift NEXAN, SN 24017, vom 14.06.2007 "Energiebusleitung ASI mit Polyurethan-Mantel HI11Y-FL"). Ein vergleichbarer Standard wird bisher für Hydraulik-Ventilbatterien aufgrund vollständig anderer Anforderungen und wegen des nicht unbedingt erforderlichen Freiheitsgrades für Umgestaltungen nicht verwendet, vermutlich auch deshalb, weil sich für Hydraulik-Ventilbatterien durchgesetzte Standards gut bewährten, und Befürchtungen und Vorurteile hinsichtlich der Sicherheitsrelevanz existierten.

Aufgrund solcher Vorurteile hinsichtlich der Sicherheitsrelevanz werden Umlaufventile nicht in das Bussystem von Ventilbatterien integriert sondern getrennt von dem Bussystem gesteuert um eine Redundanz zu schaffen, die der Sicherheit dient. Umlaufventile werden verwendet, um bei sicherheitsbedrohlichen Zuständen von hydraulischen Systemen den hohen Druck von bis zu mehreren hundert Bar schnell aus dem System zu bekommen.

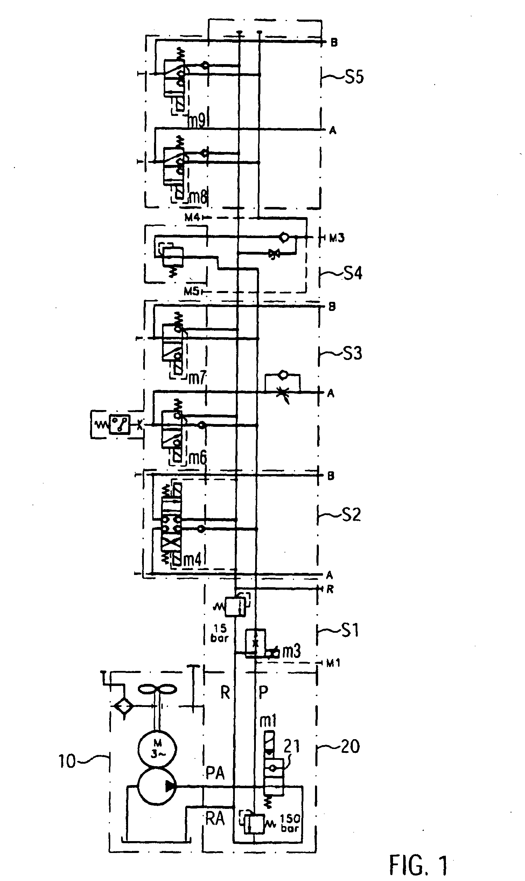

Ein Beispiel für ein hydraulisches System, das eine Ventilbatterie und ein Umlaufventil verwendet, ist in Fig. 1 gezeigt. Fig. 1 zeigt ein hydraulisches System mit einem Pumpenaggregat 10, das über einen Anschlussblock 20 mit einer Ventilbatterie mit fünf Ventilsektionen S1, S2, S3, S4 und S5 verbunden ist. In dem in Fig. 1 gezeigten Beispiel dienen die Ventilsektionen S2, S3 und S5 der Steuerung der Druckzuführung an Verbraucher durch Mehrwegeschieber- bzw. Sitzventile über Arbeitsleitungen A und B. Die Ventilsektion S4 enthält ein Ablassventil und die Ventilsektion S1 dient der Volumenstromregelung mittels proportionalem Stromregler. Der Anschlussblock 20 verbindet den Pumpenblock 10 mit der Ventilbatterie, bestehend aus S1 bis S5. Der Anschlussblock 20 enthält ein Umlaufventil 21, mit dem der Druck vom Anschluss PA zum Pumpenblock 10 in das Reservoir über den Rücklaufanschluss RA umgeleitet werden kann. In Normalbetrieb, wenn das Rücklaufventil 21 bestromt ist, so dass das Rücklaufventil 21 sperrt, wird der Druck in die Druckleitung P, die die Ventilsektionen S1 bis S5 versorgt, weitergeleitet.

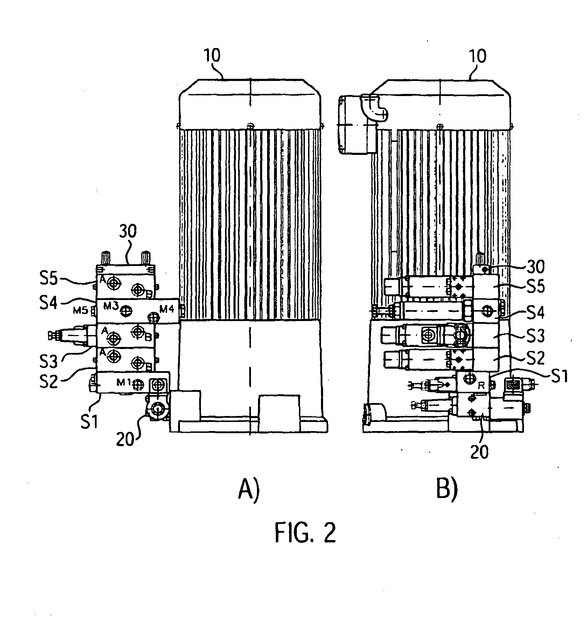

Die Fig. 2A und B zeigen zwei unterschiedliche Ansichten eines hydraulischen Systems, das das hydraulische Schaltbild von Fig. 1 realisiert. In der Fig. 2 sind die Ventilsektionen S1 bis S5 übereinander gestapelt und über eine Montageplatte 30 miteinander verbunden. Der Anschlussblock 20 mit integriertem Umlaufventil 21 und Druckbegrenzungsventil dient als Verbindung zwischen der Ventilbatterie und dem Pumpenblock 10.

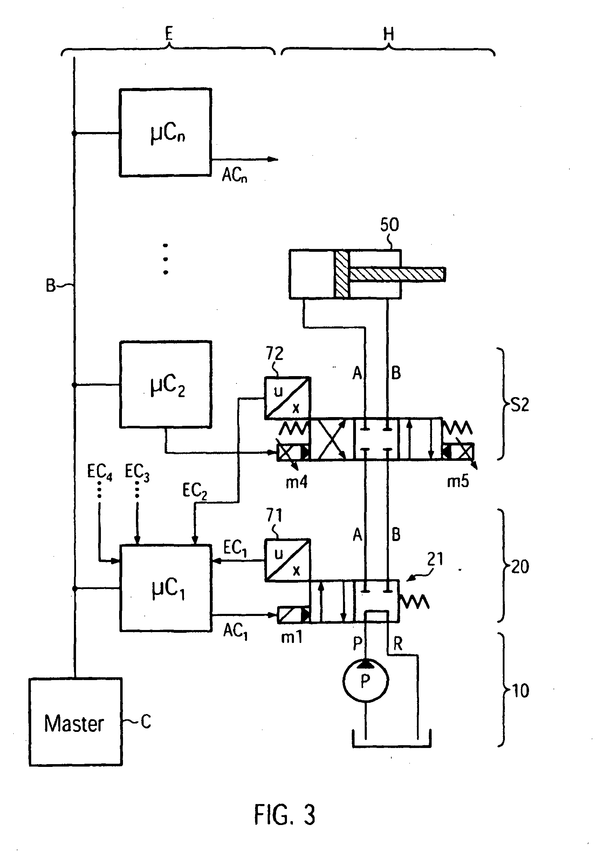

Wie in Fig. 1 zu sehen ist, sind die Ventile im Anschlussblock 20 und den Ventilsektionen S1 bis S5 durch Elektromagnete m1, m4, m5, m6, m7, m8 und m9 elektrisch betätigbar. Fig. 3 zeigt schematisch, wie das hydraulische System von Fig. 1 elektrisch gesteuert werden kann. Um die Problematik darzustellen, wurde jedoch das komplexe Hydraulikschaltbild von Fig. 1 vereinfacht. Fig. 3 zeigt nun den Pumpenabschnitt 10, den Anschlussblock 20 mit dem Umlaufventil 21 jedoch ohne Druckbegrenzungsventil von Fig. 1, und Ventilsektion S2 mit einem 4/3-Wege-Schieberventil zur Steuerung eines doppelt wirkenden Kolbens 50 als Verbraucher. Diese vereinfachte Garstellung des Hydraulikschaltbeispiels von Fig. 1 ist auf der rechten Seite der Fig. 3 mit der Bezeichnung H dargestellt.

Eine Empfehlung für die elektrische Steuerung einer solchen Hydraulikschaltung, die sicherheitsrelevante Anforderungen erfüllt, wird in dem BGIA-Report 2/2008 zur funktionalen Sicherheit von Maschinensteuerungen von dem Berufsgenossenschaftlichen Institut für Arbeitssicherheit BGIA auf Seite 130 gegeben. Der BGIA-Report zeigt als Beispiel eines sicherheitsbezogenen Teils der Steuerung (safty related parts of control systems, SRP/CS) eine Erdbaumaschinensteuerung mit Bussystem, mit der ein unerwarteter Anlauf verhindert werden soll, d.h. unerwartete Bewegungen der Arbeitsgeräte von Erdbaumaschinen sollen vermieden werden. Über die Kommunikationsverbindung B (Busleitung) laufen Signale zur Steuerung des proportionalen Mehrwegeventils der Ventilsektion S2. Dazu werden die Signale von einem busfähigen Controller µC2 empfangen, interpretiert und über eine Steuerleitung AC2 an die proportionalen Magneten m4 und m5 zur Steuerung des Mehrwegeventils weitergeleitet. In Fig. 3 sind die elektrischen Verbindungen auf der linken Seite der Figur unter der Bezeichnung E dargestellt. Ein weiterer Controller µC1 empfängt ein redundantes Signal von der Busleitung B. Der weitere Controller µC1 ist weiterhin direkt mit einem Weg-Messsystem 72 des Mehrwegeschieberventils der Ventilsektion S2 verbunden. Der weitere Controller µC1 bewertet die Signale von dem Wegemesssystem 72 und dem Signal auf der Busleitung B und entscheidet, ob der Verbraucher 50 eine unerwartete Bewegung durchführt. Bei einer unerwarteten Bewegung schaltet der weitere Mikrocontroller µC1 die Bestromung des Magneten m1 des Umlaufventils 21 über die Steuerleitung AC1 ab, so dass das Umlaufventil 21 durch die interne Feder in den Ruhezustand versetzt wird, wobei die Pumpe hydraulische Flüssigkeit direkt über den Rücklauf R in das Reservoir zurückpumpt. Weitere Sensoren, wie Stellungssensoren 71 oder Drucksensoren (nicht gezeigt), sind mit dem weiteren Mikrocontroller µC1 über direkte Verbindungsleitern EC1, EC3, EC4 verbunden, um unerwartete Bewegungen zu erkennen und entsprechend das Umlaufventil 21 zu steuern. Weitere Steuereinheiten µCn für zusätzliche Ventilsektionen können hinzugefügt werden, wie in Fig. 3 angedeutet ist.

Für die Gesamtsteuerung der verschiedenen Komponenten wird eine zentrale Steuereinrichtung C verwendet, die über die Busleitung B mit allen Ansteuerelektroniken µC1, µC2, ..., µCn kommuniziert, um Ventilsektionen zu steuern. Um die Systemsicherheit zu gewährleisten, ist die Überwachungssensorik 71 und 72 unter Umgehung der Ventilsektionssteuerungen µC2, ..., µCn direkt mit dem Controller µC1 verbunden, der das Umlaufventil 21 steuert. Durch diese Art der Redundanz wird der Verkabelungsaufwand allerdings beträchtlich, da sowohl für die Busverkabelung Signalkabelschleifen zwischen allen Ventilsektionen benötigt werden, als auch Extrakabelschleifen zwischen der Steuersektion des Umlaufventils und den verschiedenen Messsystemen im hydraulischen System benötigt werden. Zusätzlich sind noch Leistungsversorgungsschleifen zu den einzelnen Komponenten nötig.

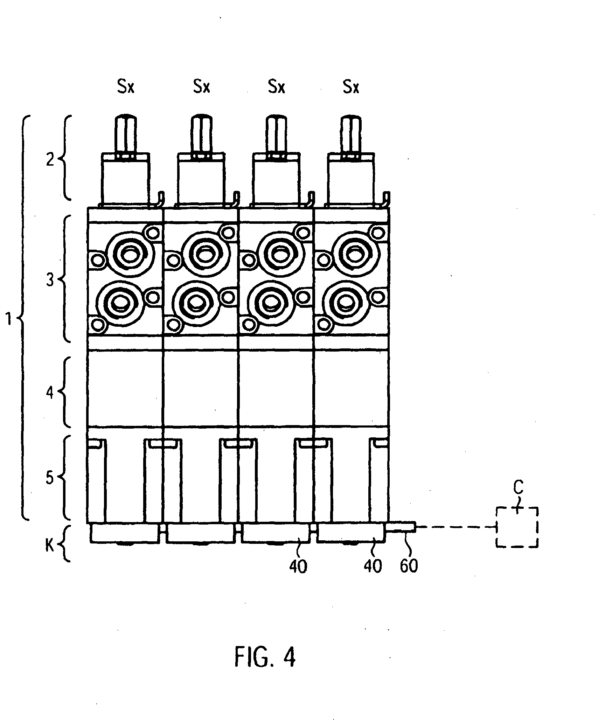

Eine erste Vereinfachung der Verkabelung wird in der europäischen Patentanmeldung 07 022 710.3 (noch nicht veröffentlicht) der Firma HAWE Hydraulik SE vorgeschlagen. Dies wird schematisch in Fig. 4 gezeigt. Fig. 4 zeigt eine Ventilbatterie mit vier Ventilsektionen, die in Fig. 4 der Einfachheit halber identisch dargestellt sind und mit Sx bezeichnet werden. Die Anzahl der Sektionen ist nur beispielhaft und könnte größer oder kleiner als gezeigt sein. In der gezeigten Ausführungsform weist jede Sektion Sx einen quaderförmigen Block 1, z.B. aus Stahl, auf. Die Blöcke 1 sind in der Ventilbatterie anfeinander gefügt, so dass nicht gezeigte Strömungsdurchgänge zwischen den Blöcken vorliegen. Alternativ könnte in einem Gruppenblock mehrere Sektionen enthalten sein, oder könnte für alle Sektionen ein gemeinsamer Block vorgesehen sein. Gezeigt sind in etwa gleich hohe Sektionen, obwohl die Höhen und/oder Breiten der Sektionen innerhalb der Ventilbatterie auch variieren können. Jede Ventilsektion weist eine Betätigungsseite 2, beispielsweise mit nicht näher hervor gehobenen Handhebeln an der Oberseite auf. Weiterhin enthält jede Ventilsektion einen fluidischen Abschnitt 3 mit z.B. Fluidanschlüssen A und B auf. In einem weiteren Bereich 4 ist eine Aktorik zur aktiven Betätigung z.B. der Wegeschiebeventile enthalten. In einem weiteren Abschnitt 5 der Ventilsektionen ist die Ventilelektronik untergebracht. An der in Fig. 4 gezeigten Unterseite der Ventilsektionen ist die Verkabelung K angebracht. Die Verkabelung K ist in Form paralleler Kabel 60 vorgesehen, die mit steckerlosen Kontaktverbindungen, die über kraftschlüssig festgelegten Deckeln 40 gehaltert sind, die Ventilsektionen untereinander und mit einer übergeordneten Steuerung C verbinden.

Die Hydraulikventilbatterie, die in der Patentanmeldung 07 022 710.3 vorgeschlagen ist, sieht jedoch keine entsprechend kontaktierbare baulich in die Batterie integrierbare Umlaufventilsektion vor aufgrund der sicherheitstechnischen Befürchtungen und Vorurteile, wie sie oben beschrieben wurden.

Die DE 10 2004 028 437 betrifft eine Ventilanordnung mit einem Hochdruckanschluss, einem Niederdruckanschluss, mindestens einem Steuerventil, das in einem Steuerventilmodul aufgenommen ist und mindestens einen Arbeitsanschluss für einen hydraulischen Verbraucher aufweist, und einem Sicherheitsventil, das in einem Sicherheitsventilmodul aufgenommen ist und einen Durchgang zwischen dem Hochdruckanschluss und den Steuerventilen freigibt oder sperrt, wobei das Steuerventilmodul und das Sicherheitsventilmodul zu einer Baugruppe verbunden sind.

In der mittleren Stellung verbindet das Sicherheitsventil den Hochdruckanschluss mit dem Niederdruckanschluss und fungiert somit als Umlaufventil. Anders als bei der erfindungsgemäßen Hydraulik-Ventilbatterie gibt es keine intelligente Umlaufventilsteuerung, die zur Kommunikation mit wenigstens einer Ventilsektion mit einer Kommunikationsverbindung an eine CAN-Busverkabelung angeschlossen ist.

Der Erfindung liegt die Aufgabe zugrunde, eine Hydraulik-Ventilbatterie der eingangs genannten Art zu schaffen, die sich durch eine kostengünstige, platzsparende, zuverlässige und beschädigungsresistente Verkabelung auszeichnet, und in die sich ein Umlaufventil als eigenständige modulare Ventilsektion integrieren lässt, die einen zur kostengünstigen, platzsparenden, zuverlässigen und beschädigungsresistenten Verkabelung kompatiblen Anschluss aufweist.

Die gestellte Aufgabe wird mit den Merkmalen des Anspruchs 1 gelöst.

Demnach wird in die Hydraulik-Ventilbatterie eine den Ventilsektionen funktionell zugeordnete Umlaufventilsektion, die mit einer intelligenten Umlaufventilsteuerung versehen ist, baulich integriert, und die intelligente Umlaufventilsteuerung ist zumindest zur Kommunikation mit wenigstens einer Ventilsektion mit einer Kommunikationsverbindung an eine Kommunikationsbusverkabelung angeschlossen.

Dadurch wird ein flexibles modulares Ventilbatteriesystem bereitgestellt, das die Verkabelung zu einer Umlaufventilsektion vereinfacht, ohne dessen Sicherheitsfunktionen zu beeinträchtigen. Außerdem erlaubt die bauliche Integration des Umlaufventils mit anderen Ventilsektionen sowie der Kommunikationsverkabelung ein geschlossenes Systemkonzept, das flexibler, leichter aufzubauen, zu konfigurieren und zu warten ist.

Weiterhin ist die Umlaufventilsektion direkt oder über die intelligente Umlaufventilsteuerung zusätzlich unabhängig von der Kommunikationsverbindung mit der Kommunikationsbusverkabelung betätigbar. Durch die zusätzliche von der Kommunikationsverbindung unabhängige Möglichkeit der Betä-tigung des Umlaufventils wird die Sicherheitsfunktion der Umlaufventilsektion verbessert.

Die Kommunikationsbusverkabelung und die Kommunikationsverbindung entspricht weiterhin einer CAN-Busspezifikation. Der CAN-Bus ist ein weit verbreiteter Industriestandard und gewährleistet Kompatibilität und Wahrung von Sicherheitsfunktionen bei Kombinationen von Komponenten unterschiedlicher Hersteller. Auch Systemwartung und Konfiguration vereinfacht sich bei standardisierten Komponenten.

Die intelligente Umlaufventilsteuerung ist so ausgelegt, dass sie die Signale auf der Kommunikationsbusverkabelung verarbeitet und zur Steuerung der Umlaufventilsektion verwendet. In dieser Ausführungsform hört die intelligente Umlaufventilsteuerung die Kommunikation auf der Kommunikationsbusverkabelung mit und entscheidet aufgrund der Kommunikation, ob das System in einen sicherheitsrelevanten kritischen Zustand gerät, um den Druck gegebenenfalls aus dem System zu nehmen.

In einer weiteren Ausführungsform weist die intelligente Umlaufventilsteuerung wenigstens einen Prozessor auf. Durch den Prozessor wird die Umlaufventilsektion flexibler an Systemdesigns anpassbar, unabhängiger vom Gesamtsystem und sicherer, da zusätzliche elektronische Sicherheits- und Steuerfunktionen auch nachträglich softwaremäßig eingebaut werden können.

In einer anderen Ausführungsform ist zumindest eine der Ventilsektionen mit einem Prozessor ausgestattet, der eine Ventilsektion oder eine Gruppe von Ventilsektionen steuert. Durch den Prozessor wird die entsprechende Ventilsektion flexibler an Systemdesigns anpassbar, unabhängiger vom Gesamtsystem und sicherer, da zusätzliche elektronische Steuerfunktionen auch nachträglich softwaremäßig eingebaut werden können.

In einer Ausführungsform ist die zentrale Steuereinrichtung an die Kommunikationsbusverkabelung angeschlossen, und die Umlaufventilsektion ist auch unabhängig von Signalen von der zentralen Steuereinrichtung auf der Kommunikationsbusverbindung betätigbar, vorzugsweise von einem System- oder Lastdruck-Überwacher oder einem Notausschalter, vorzugsweise über eine den Prozessor umgehende Hartverdrahtung zu einem Aktuator der Umlaufventilsektion. In dieser Ausführungsform ist die intelligente Umlaufventilsteuerung von der zentralen Steuerungseinrichtung getrennt und unabhängig von ihr steuerbar wodurch die Redundanz erhöht wird und damit auch die Sicherheit.

In einer weiteren Ausführungsform ist die intelligente Umlaufventilsteuerung so ausgeführt, dass sie an der Kommunikationsbusverkabelung als die zentrale Steuereinrichtung für ein Hydrauliksystem mit der Hydraulik-Ventilbatterie verwendet wird. Da die Intelligenz der intelligenten Umlaufventilsteuerung auch für übergeordnete Steuerfunktionen verwendbar ist, erreicht man mit dieser Ausführungsform eine resourcenefficiente Realisierung eines hydraulischen Gesamtsystems.

In einer anderen Ausführungsform weist ein Umlaufventil der Umlaufventilsektion als Aktuator einen Proportionalmagneten auf. Damit kann die Umlaufventilsektion flexibler auf Störungen reagieren, z.B. indem sie den Druck im System nicht auf Null absenkt, sondern nur auf einen geeigneten abgesenkten Wert, der ausreicht, um beispielsweise eine ungewollte gefährliche Bewegung eines hydraulischen Verbrauchers, beispielsweise ein Schwenkarm, zu verhindern.

In einer weiteren Ausführungsform ist der Aktuator des Umlaufventils der Umlaufventilsektion im Normalbetrieb bestromt, so dass der Umlaufventilversorgungsdruck für an die Ventilsektionen angeschlossene Verbraucher weitergeleitet wird, und eine Feder schaltet im unbestromten Zustand des Aktuators das Umlaufventil so, dass der Umlaufventilversorgungsdruck in ein Reservoir geleitet wird. Diese Verschaltung des Umlaufventils hat den Vorteil, dass das des Umlaufventils bei Stromausfall automatisch durch die Feder in die Stellung versetzt wird, in der der Pumpendruck in das Reservoir geleitet wird und das System damit druckentlastet wird.

In einer weiteren Ausführungsform umfasst die Hydraulik-Ventilbatterie weiterhin an die Kommunikationsbusverkabelung angeschlossene Stellungs-/ oder Drucksensoren. Die Stellungs-/ oder Drucksensoren dienen als weitere Sicherheitseinrichtung, mit dem der Zustand des hydraulischen Systems überwacht wird, um es gegebenenfalls abzuschalten.

In einer Ausführungsform weisen die Stellungs- oder/und Drucksensoren Ansteuer- und/oder Auswertungs-Sensorelektroniken auf, die an der Kommunikationsbusverkabelung angeschlossen sind. Dadurch wir umständliche Querverkabelung eingespart und Aufbau und Wartung des Systems vereinfacht sich.

In einer Ausführungsform davon sind die Stellungs- oder/und Drucksensoren direkt mit der intelligenten Umlaufventilsteuerung verbunden, der Umlaufventilsektion funktionell zugeordnet oder sogar in diese eingegliedert. Um die Redundanz zu erhöhen und um damit die Systemsicherheit zu verbessern, können die Stellungs- oder/und Drucksensoren direkt mit der intelligenten Umlaufventilsteuerung verbunden werden, so dass die intelligenten Umlaufventilsteuerung beim Ausfall des Bussystems trotzdem Informationen über den Systemzustand bekommt.

In einer weiteren Ausführungsform ist als wenigstens eine weitere, baulich in die Ventilbatterie integrierte Sektion eine drahtlose Funktionssteuer- und/oder Oberwachungssektion vorgesehen und mit der Kommunikationsverbindung an die Kommunikationsbusverkabelung angeschlossen. Dadurch wird die Flexibilität der Ventilbatterie bedeutend erweitert, da nicht nur externe Rechner als Steuergerät schnurlos eingebunden werden kann, sonder auch Sensoren und Ventile an schwer zugänglichen Bereichen kabellos eingebunden werden können.

In einer noch anderen Ausführungsform weist die Kommunikationsbusverkabelung wenigstens ein über ein Gehäuse der Sensor-/Ventilelektroniken und der intelligenten Umlaufventilsteuerung durchgehend hinweg verlaufendes Kabel auf, ist zwischen dem Kabel und der Sensor-/Ventilelektroniken bzw. der intelligenten Umlaufventilsteuerung eine steckerlose Kontaktverbindung mit wenigstens einem kraftschlüssig in das Kabel eingepressten Kontaktdorn pro Ader des Kabels vorgesehen, weist die Kontaktverbindung einen das Kabel abdeckenden, auf das Gehäuse der Sensor-/Ventilelektroniken bzw. der intelligenten Umlaufventilsteuerung mit Kraftschluss und Anpressung aufbringbaren Deckel mit einer Positionieraufnahme für das Kabel auf, und ist der zumindest eine Kontaktdorn in wenigstens einem in einem Durchgang des Gehäuses der Sensor-/Ventilelektroniken bzw. der intelligenten Umlaufventilsteuerung installierten Sockel angeordnet und steht vom Gehäuse quer zur Verlaufsrichtung des Kabels nach außen in die Positionieraufnahme vor und ist im Gehäuse an wenigstens einer am Sockel angebrachten Platine der Sensor-/Ventilelektroniken bzw. der intelligenten Umlaufventilsteuerung angeschlossen.

Mit dieser Ausführungsform wird eine einfache Kontaktierung zwischen den Ventilsektionen und der Busverkabelung erreicht, wodurch insbesondere die Montage erleichtert wird und auf teure Steckverbindungen verzichtet werden kann.

Anhand der Zeichnungen werden Ausführungsformen der Erfindung erläutert. Es zeigen:
- Fig. 1: beispielhaft ein hydraulisches System anhand eines Fluidschaltbildes gemäß des Standes der Technik;
- Fig. 2: ein Schema einer Realisierung des Systems von Fig. 1;
- Fig. 3: einen Ausschnitt des hydraulischen Schemas von Fig. 1 zusätzlich mit dessen elektrischer Steuerung;
- Fig. 4: wesentliche Elemente einer Ventilbatterie mit integriertem Bussystem gemäß des Standes der Technik;
- Fig. 5: ein Hydraulikschema mit elektrischer Ansteuerung für eine Hydraulikventilbatterie gemäß der vorliegenden Erfindung;
- Fig. 6: einen Querschnitt eines Ventils einer Hydraulikventilbatterie mit integrierter Aktorik und/oder Sensorik sowie Ansteuer- und/oder Auswertungselektronik, einschließlich einer Kommunikationsbusverkabelung der vorliegenden Erfindung; und
- Fig. 7: einen vergrößerten Schnitt aus Fig. 6 zur Verdeutlichung der Verkabelung der Sektionen.

Anzumerken ist, dass in den Figuren und in der Beschreibung mit dem Bezugszeichen K eine Kommunikationsbusverkabelung und mit dem Bezugszeichen B eine Kommunikationsverbindung bezeichnet wird. Die beiden Begriffe wurden eingeführt, um zwischen verschiedenen Abstraktionsebenen zu unterscheiden. Unter Kommunikationsbusverkabelung K sollt die hardwaremäßige Ausführung der Verkabelung, d.h. Lage, Dicke, Material, Befestigung, etc. der Verkabelung, verstanden werden. Unter Kommunikationsverbindung B soll die übergeordnete Abstraktionsebene, d.h. Signalpegel, Busprotokolle, Timing, etc. auf der Kommunikationsverkabelung K, verstanden werden. In den Figuren wird das verdeutlicht, indem in den elektrofluidischen Schaltplänen der Kommunikationsbus mit dem Bezugszeichen B bezeichnet wird, um der höheren Abstraktionsebene Rechnung zu tragen, und in den technischen Querschnittszeichnungen 6 und 7 wird die Busverkabelung mit Bezugszeichen K bezeichnet.

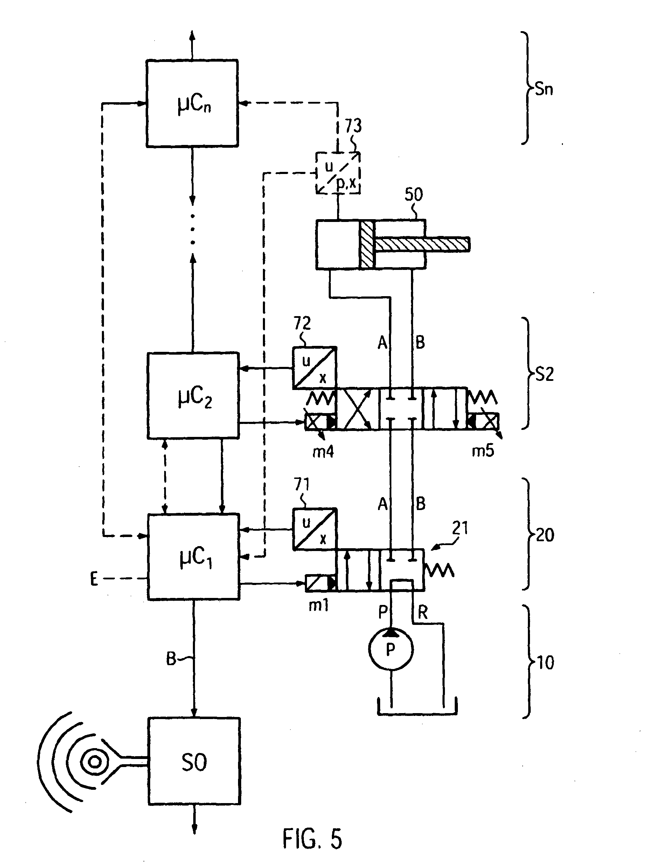

Einige wichtige Aspekte der vorliegenden Erfindung werden nun mit Bezug auf Fig. 5 erläutert. Fig. 5 zeigt eine Abwandlung des elektrofluidischen Schaltplans von Fig. 3. Im Gegensatz zu Fig. 3 sind in Fig. 5 die Ventilsegmente 20 und S2 modulare Einheiten, die unabhängig voneinander in einer Ventilbatterie kombiniert werden können. Das heißt, die Module S1 und 20 können als eigenständige Ventilsegmente verwendet werden. Im Gegensatz dazu benötigt das Ventilsegment S2 aus der Fig. 3 das Segment 20 (Anschlussblock) aus der Fig. 3 zur Auswertung der Ventilsensorik 72. Um als eigenständiges modular verwendbares Segment dienen zu können, enthält jede Ventilsektion der Fig. 5 deshalb die gleichen Grundelemente, die bereits in Verbindung mit Fig. 4 angesprochen wurden, nämlich einen fluidischen Teil (z. B. ein Ventil 21), eine elektrisch betätigbare Aktorik (Magnete m1, m4, m5), eine Sensorik (z.B. Stellungssensoren der Ventile 71, 72) und eine Ansteuer- und/oder Auswertungselektronik, die in Fig. 5 als prozessorunterstützte Steuer- und Auswerteelektronik µC1 und µC2 dargestellt ist. Sensorik und Aktorik einer einzelnen Ventilsektion arbeitet zunächst unabhängig von anderen Ventilsektionen mit der eigenen Ansteuer- und/oder Auswertungsventilelektronik zusammen. Die Ansteuer- und/oder Auswertungsventilelektronik jeder Ventilsektion verfügt außerdem über eine genormte Kommunikationsbusschnittstelle zum Anschluss an ein genormtes Bussystem. Das System kann auch Stellungs- und Drucksensoren 73 enthalten, z.B., um den Druck auf einer Load-Sensing-Leitung oder die Stellung eines hydraulischen Verbrauchers, beispielsweise ein Schwenkarm angetrieben durch einen hydraulischen Zylinder 50, zu erfassen. Solche Sensorsysteme können z.B. als eigenständige Module mit eigener intelligenter Auswerteelektronik und Busschnittstelle µCn ausgelegt werden. Alternativ kann die Sensorik auch z.B. in die Umlaufventilsektion 20 integriert oder an ihr angeschlossen sein (angedeutet durch gestrichelte Linie). Zur Erhöhung der Redundanz können auch zusätzliche Busleitungen vorgesehen sein, die eine zusätzliche Verbindung zwischen den einzelnen Ventil-/Sensorelektroniken µC2, ..., µCn und der intelligenten Umlaufventilsteuerung µC1 vorgesehen werden (angedeutet durch gestrichelte Linien). Ein externer Eingang E in die intelligente Umlaufventilsteuerung µC1 kann z.B. für einen handbetätigbaren Notausschalter verwendet werden. Um eine Not-AUS-Funktion auch bei elektrischen Störungen zu ermöglichen, kann das Umlaufventil 21 über eine mechanische Handventilbetätigung und/oder eine handbetätigbare Stromunterbrechung des Aktuators m1 aufweisen.

In Fig. 5 ist eine Sektion S0 gezeigt, die eine drahtlose Kommunikation mit dem Bussystem ermöglicht, durch die nicht nur externe Rechner als Steuergerät schnurlos eingebunden werden können, sonder auch beispielsweise Sensoren und Ventile an schwer zugänglichen Bereichen kabellos eingebunden werden können.

Da jedes Modul, Ventilsektion 20, S2, Sensorsektion Sn, oder drahtlose Kommunikationssektion S0 über eigene Prozessoren µC1, µC2, µCn verfügen kann, ist es möglich, jede Sektion als Master des gesamten Bussystems oder als Steuerung eines Teils des Bussystems mit entsprechenden Sektionen zu programmieren. Es kann jedoch auch ein unabhängiges Rechnermodul an das Bussystem angeschlossen werden, das als übergeordnete und zentrale Steuereinrichtung fungiert. Idealerweise kann die intelligente Umlaufventilsteuerung µC1 als zentrale Steuereinrichtung verwendet werden, da die intelligente Umlaufventilsteuerung µC1 alle sicherheitsrelevanten sensorischen Daten des hydraulischen Systems erfassen und auswerten muss, um gegebenenfalls eine Druckentlastung des Systems herbeizuführen.

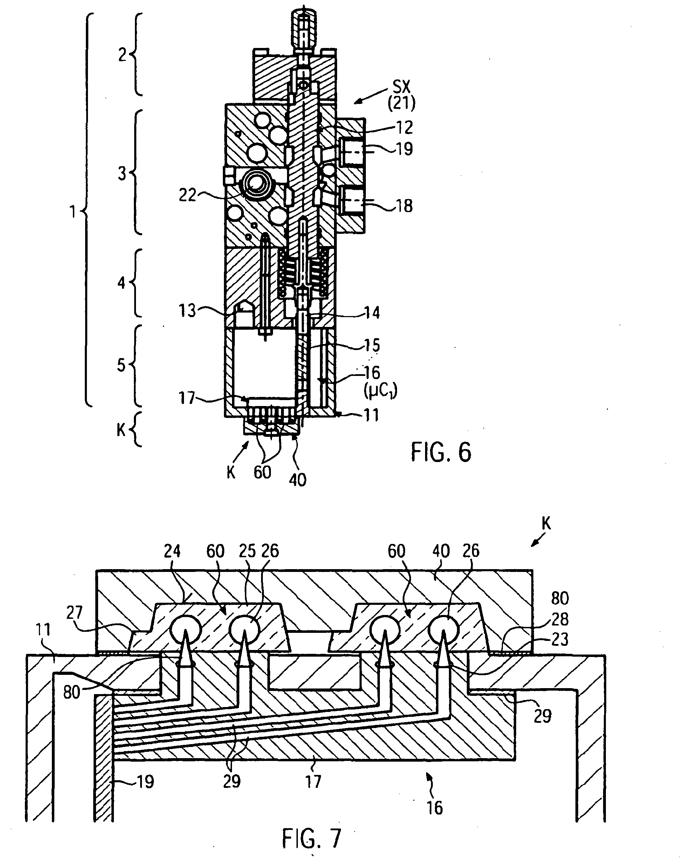

Zur Verdeutlichung des modularen Charakters der vorliegenden Erfindung ist in Fig. 6 ein Querschnitt durch eine Ventilsektion Sx, wie sie bereits in Fig. 4 angedeutet ist, gezeigt. Fig. 6 zeigt einen im Block 1 verschiebbaren Kolbenschieber 12, der an der Betätigungsseite 2 gegebenenfalls manuell, und durch eine Aktorik 13, z.B. Zwillingsmagneten, verstellbar ist, die im Aktorikabschnitt 4 enthalten ist. Im am Aktorikabschnitt 4 montierten Gehäuse 11 des Elektronikabschnitts 5 ist die Ventilelektronik 16 enthalten, die auch einen Prozessor umfassen kann, der der Elektronik Intelligenz verleiht. Ebenso sind in der Ventilelektronik 16 die Busschnittstelle enthalten. Mit dem Kolbenschieber 12 ist ein Verlängerungsteil 14 verbunden, der Teil einer Sensorik 15 ist, beispielsweise eines Wegaufnehmers mit einem Permanentstabmagneten. Die Sensorik 15 könnte alternativ aus einem inkrementellen Wegaufnehmer bestehen. Gegebenenfalls umfasst die Sensorik 15 einen Regler und/oder ein Messgerät und/oder einen Zähler oder dergleichen. Mit der Sensorik 15, beispielsweise einem Wegaufnehmer, wird die korrekte Position des Wegeschieberventils überwacht und/oder geregelt. Im Gehäuse 11 des Elektronikabschnittes 5 ist ein Sockel 17 montiert, der zum Herstellen einer steckerlosen Kontaktverbindung mit Kabeln 60 der Kommunikationsbusverkabelung K benötigt wird. In Fig. 6 gezeigt ist ein Kabel 60, bestehend aus zwei parallel verlaufenden zweiadrigen Kabelsträngen. Anstelle, wie gezeigt, zweier Kabel 60 könnte auch ein einziges Kabel oder ein mehradriges Flachbundkabel installiert sein.

Die Bauart der in Fig. 6 gezeigten Ventilsektion erlaubt auch eine Verwendung als Umlaufventilsektion 20. Der fluidische Teil der Umlaufventilsektion 20 kann aber auch anders gestaltet werden wie im Stand der Technik bekannt ist. In der in Fig. 6 gezeigten Darstellung drückt eine Feder den Schieberkolben 12 nach oben, so dass eine Verbindung zwischen dem Kanal 22 und dem Kanal 19 entsteht. Wenn der Kanal 22 mit dem Pumpenanschluss (siehe Fig. 1 Bezugszeichen PA) verbunden ist, und wenn der Kanal 19 mit dem Rücklaufanschluss (siehe Fig. 1 Bezugszeichen RA) verbunden ist, pumpt die Pumpe hydraulische Flüssigkeit in das Reservoir und das System ist Druckentlastet. Wird die interne Aktorik (Magnet m1 aus Fig. 1, 3 oder 5) betätigt, bewegt sich der Kolben 12 nach unten und es entsteht eine Verbindung zwischen dem Kanal 22 und dem Kanal 18. Ist der Kanal 18 mit der Druckleitung (siehe Fig. 1 Bezugszeichen P) verbunden, kann das in Fig. 6 gezeigte Ventil eine Umlaufventilfunktion erfüllen.

Fig. 7 zeigt einen vergrößerten Ausschnitt der Fig. 6, um die Ausbildung der steckerlosen Kontaktverbindung zwischen der Ventilelektronik 16 und den Kabeln 60 zu verdeutlichen. Ein Deckel 40 besitzt unterseitig wenigstens eine Positionieraufnahme 24 (in vorliegendem Fall zwei gleichartige Positionieraufnahmen 24), die in Querschnitt an den Querschnitt der Isolierhülle des Kabels 60 angepasst ist. Das Kabel 60 ist beispielsweise ein sogenanntes ASI-Buskabel mit zwei parallelen Adern 26 und der elastischen Isolierhülle 25 aus durchstichbarem Material. Die Isolierhülle 25 hat in dieser Ausführungsform trapezförmigen Querschnitt mit einer einer Ader 26 zugeordneten Profilnase 27 an einer Trapezschrägseite. Die Positionieraufnahme 24 ist der Querschnittsform der Isolierhülle 25 exakt angepasst. Bei Verwendung eines anderen Kabels benötigt die Positionieraufnahme 24 einen anderen Querschnitt, um das Kabel exakt zu positionieren und positioniert gegen die Kontaktdorne 80 anpressen zu können. Im Sockel 17 sind mehrere Kontaktdorne 80 eingebettet, die Überleitungen 29 an die im Sockel 17 angebrachte Platine 19 angeschlossen sind. Die Kontaktdorne 80 ragen über den Sockel 17 soweit bis in die Positionieraufnahme 25 vor, dass bei kraftschlüssigem Aufpressen des Deckels 40 mit positionierten Kabeln 60 die Kontaktdorne 80 die Isolierhüllen 25 durchstechen und in die Adern 26 eindringen, um den Kontakt herzustellen. Zwischen dem Gehäuse 11 und dem Deckel 40 kann eine Dichtung 28 vorgesehen werden. Auch zwischen dem Sockel 17 und dem Gehäuse 11 kann eine Dichtung 29 vorgesehen sein. Es könnte auch für jedes Kabel 60 ein eigener Deckel 40 vorgesehen werden. Zweckmäßig wird beispielsweise ohne Verwendung zumindest der Dichtung 28, die Elastizität der Isolierhülle 25 des Kabels 60 benutzt, um über den Anpressdruck des Deckels 4 auf die erforderliche Dichtigkeit zu erzeugen.

In Fig. 7 sind die zwei Kabel 60 in den Positionieraufnahmen 24 gleichsinnig installiert, d.h. jede Profilnase 27 weist nach links. Monteure oder Kunden, welche die Kabel 6 montieren oder austauschen, oder eine Sektion austauschen, könnten somit die Kabel 60 versehentlich vertauschen, so dass beispielsweise der Versorgungsstrom die Ventilelektronik zerstören könnte. Um dies zu verhindern, werden bei einer nicht gezeigten Alternative die beiden Positionieraufnahmen 24 des Deckels 40 von Fig. 7 spiegelbildlich angeordnet und die beiden Kabel 60 auch so installiert, dass bei beiden Kabeln 60 die Profilnasen 27 zueinander weisen. Im Falle eines einzigen Kabels (nicht gezeigt), das Adern 26 für die Leistungsversorgung und Adern für die Kommunikation enthält, wird dieses zweckmäßig, ebenso wie auch die einzige Positionieraufnahme 24, mit asymmetrischem Querschnitt ausgebildet, um eine einzige und korrekte Installationslage des Kabels zu erzwingen.

Optional kann auch ein vieladriges Kabel, beispielsweise ein Flachbandkabel, das auch asymmetrisch ausgebildet sein kann, um Fehlmontage zu verhindern, verwendet werden, um zusätzliche Leitungen für Verbindungen von einzelnen Sensoren oder einzelnen Sensor- bzw. Ventilelektroniken zur intelligenten Umlaufventilsteuerung µC1 als integralen Bestandteil der Kommunikationsbusverkabelung bereitzustellen.

## Patentansprüche

1. Hydraulik-Ventilbatterie,
mit mehreren, modular gefügten Ventilsektionen (S1- S5, Sx), von denen zumindest einige wenigstens eine elektrische Aktorik (13) und/oder Sensorik (15) und zumindest eine Ansteuer- und/oder Auswertungs-Ventilelektronik (16) enthalten, und
mit einer zumindest einige Ventilsektionen (S1- S5, Sx) mit einer zentralen Steuereinrichtung (C) verbindenden CAN-Busverkabelung (K) zur Steuerung und/oder Überwachung der Ventilsektionen (S1- S5, Sx),
worin in die Hydraulik-Ventilbatterie eine den Ventilsektionen (S1- S5, Sx) funktionell zugeordnete Umlaufventilsektion (20) baulich integriert ist, die zur Druckentlastung zwischen einem Pumpenanschluss (P, PA) und einem Rücklaufanschluss (R, RA) der Hydraulik-Ventilbatterie angeordnet ist, und die mit einer intelligenten Umlaufventilsteuerung (µC1) versehen ist,
wobei die Intelligente Umlaufventilsteuerung (µC1) zumindest zur Kommunikation mit wenigstens einer Ventilsektion (S1- S5, Sx) mit einer Kommunikationsverbindung (B) an die CAN-Busverkabelung (K) angeschlossen ist,
wobei die Umlaufventilsektion (20) direkt oder über die Intelligente Umlaufventilsteuerung (µC1) zusätzlich unabhängig von der Kommunikationsverbindung (B) mit der Kommunikationsbusverkabelung (K) betätigbar ist, und
wobei die intelligente Umlaufventilsteuerung (µC1) so ausgelegt ist, dass sie die Signale auf der CAN-Busverkabelung (K) verarbeitet und zur Steuerung der Umlaufventilsektion (20) verwendet.

2. Hydraulik-Ventilbatterie nach Anspruch 1, **dadurch gekennzeichnet, dass** die intelligente Umlaufventilsteuerung (µC1) wenigstens einen Prozessor aufweist.

3. Hydraulik-Ventilbatterie gemäß wenigstens einem der Ansprüche 1 - 2, **dadurch gekennzeichnet, dass** zumindest eine der Ventilsektionen (S1- S5, Sx) mit einem Prozessor (µC1, µCn) ausgestattet ist, der eine Ventilsektion (S1- S5, Sx) oder eine Gruppe von Ventilsektionen (S1- S5, Sx) steuert.

4. Hydraulik-Ventilbatterie gemäß wenigstens einem der Ansprüche 1-3, **dadurch gekennzeichnet, dass** die zentrale Steuereinrichtung (C) an die CAN-Busverkabelung (K) angeschlossen ist, und dass die Umlaufventilsektion (20) auch unabhängig von Signalen von der zentralen Steuereinrichtung (C) auf der Kommunikationsbusverbindung (B) betätigbar ist, vorzugsweise von einem System- oder Lastdruck-Überwacher oder einem Notausschalter, vorzugsweise über eine den Prozessor umgehende Hartverdrahtung zu einem Aktuator (13) der Umlaufventilsektion (20).

5. Hydraulik-Ventilbatterie gemäß wenigstens einem der Ansprüche 1 - 4, **dadurch gekennzeichnet, dass** die intelligente Umlaufventilsteuerung (µC1) so ausgeführt ist, dass sie an der CAN-Busverkabelung (K) als die zentrale Steuereinrichtung (C) für ein Hydrauliksystem mit der Hydraulik-Ventilbatterie verwendet wird.

6. Hydraulik-Ventilbatterie gemäß wenigstens einem der Ansprüche 1 - 5, **dadurch gekennzeichnet, dass** ein Umlaufventil (21) der Umlaufventilsektion (20) als Aktuator (13) einen Porportionalmagneten aufweist.

7. Hydraulik-Ventilbatterie nach Anspruch 6, **dadurch gekennzeichnet, dass** der Aktuator (13) des Umlaufventils (21) der Umlaufventilsektion (20) im Normalbetrieb bestromt ist, so dass der Umlaufventilversorgungsdruck für an die Ventilsektionen (S1- S5, Sx) angeschlossene Verbraucher weitergeleitet wird, und dass im unbestromten Zustand des Aktuators (13) eine Feder das Umlaufventil (21) so schaltet, das der Umlaufventilversorgungsdruck in ein Reservoir geleitet wird.

8. Hydraulik-Ventilbatterie gemäß wenigstens einem der Ansprüche 1-7, **dadurch gekennzeichnet, dass** die Hydraulik-Ventilbatterie weiterhin an die CAN-Busverkabelung (K) angeschlossene Stellungs-/ oder Drucksensoren (15, 71, 72, 73) umfasst.

9. Hydraulik-Ventilbatterie gemäß Anspruch 8, **dadurch gekennzeichnet, dass** die Stellungs- oder/und Drucksensoren (15, 71, 72, 73) Ansteuer- und/oder Auswertungs-Sensorelektroniken (µC1, µC2, µCn) aufweisen, die an der CAN-Busverkabelung (K) angeschlossen sind.

10. Hydraulik-Ventilbatterie gemäß Anspruch 8 oder 9, **dadurch gekennzeichnet, dass** die Stellungs- oder/und Drucksensoren (15, 71, 72, 73) direkt mit der intelligenten Umlaufventilsteuerung (µC1) verbunden, der Umlaufventilsektion (20) funktionell zugeordnet oder sogar in diese eingegliedert sind.

11. Hydraulik-Ventilbatterie gemäß wenigstens einem der vorgehenden Ansprüche, **dadurch gekennzeichnet, dass** als wenigstens eine weitere, baulich in die Ventilbatterie integrierte Sektion (S0) eine drahtlose Funktionssteuer- und/oder Überwachungssektion vorgesehen und mit der Kommunikationsverbindung (B) an die CAN-Busverkabelung (K) angeschlossen ist.

12. Hydraulik-Ventilbatterie gemäß wenigstens einem der Ansprüche 1 - 11, **dadurch gekennzeichnet, dass** die Kommunikationsbusverkabelung (K) wenigstens ein über ein Gehäuse (11) der Sensor-/Ventilelektroniken (16) und der intelligenten Umlaufventilsteuerung (µC1) durchgehend hinweg verlaufendes Kabel (60) aufweist, dass zwischen dem Kabel (60) und der Sensor-/Ventilelektroniken (16) bzw. der intelligenten Umlaufventilsteuerung (µC1) eine steckerlose Kontaktverbindung mit wenigstens einem kraftschlüssig in das Kabel (60) eingepressten Kontaktdorn (80) pro Ader (26) des Kabels (60) vorgesehen ist, dass die Kontaktverbindung einen das Kabel (60) abdeckenden, auf das Gehäuse (11) der Sensor-/Ventilelektroniken (16) bzw. der intelligenten Umlaufventilsteuerung (µC1) mit Kraftschluss und Anpressung aufbringbaren Deckel (40) mit einer Positionieraufnahme (24) für das Kabel (60) aufweist, und dass der zumindest eine Kontaktdorn (80) in wenigstens einem in einem Durchgang (23) des Gehäuses (11) der Sensor-/Ventilelektroniken (16) bzw. der intelligenten Umlaufventilsteuerung (µC1) installierten Sockel (17) angeordnet ist und vom Gehäuse (11) quer zur Verlaufsrichtung des Kabels (60) nach außen in die Positionieraufnahme (24) vorsteht und im Gehäuse (11) an wenigstens eine am Sockel (17) angebrachte Platine (19) der Sensor-/Ventilelektroniken (16) bzw. der intelligenten Umlaufventilsteuerung (µC1) angeschlossen ist.

## Claims

1. Hydraulic valve array,
having several, modularly joined valve sections (S1 - S5, Sx) at least some of which contain at least one electric actuator mechanism (13) and/or sensor mechanism (15) and at least one control and/or evaluation valve electronics (16), and
having a CAN bus cabling (K) connecting at least some valve sections (S1 - S5, Sx) with a central control device (C) for controlling and/or monitoring the valve sections (S1 - S5, Sx),
wherein a circulation valve section (20) functionally associated to the valve sections (S1 - S5, Sx) is structurally integrated in the hydraulic valve array, the circulation valve section (20) being arranged for pressure relief between a pump connection (P, PA) and a return connection (R, RA) and being provided with an intelligent circulation valve control (µC1),
wherein the intelligent circulation valve control (µC1) is connected to the CAN bus cabling (K) at least for communication with at least one valve section (S1 - S5, Sx) with a communication link (B),
wherein the circulation valve section (20) can be actuated directly or via the intelligent circulation valve control (µC1), additionally independent of the communication link (B) with the communication bus cabling (K),
wherein the intelligent circulation valve control (µC1) is designed such that it processes the signals on the CAN bus cabling (K) and uses them for controlling the circulation valve section (20).

2. Hydraulic valve array according to claim 1, **characterized in that** the intelligent circulation valve control (µC1) comprises at least one processor.

3. Hydraulic valve array according to at least one of claims 1 - 2, **characterized in that** at least one of the valve sections (S1 - S5, Sx) is equipped with a processor (µC1, µCn) which controls a valve section (S1 - S5, Sx) or a group of valve sections (S1 - S5, Sx).

4. Hydraulic valve array according to at least one of claims 1 - 3, **characterized in that** the central control device (C) is connected to the CAN bus cabling (K), and that the circulation valve section (20) can also be actuated independent of signals from the central control device (C) on the communication bus link (B), preferably by a system or load pressure controller or an emergency stop switch, preferably via a hard wiring to an actuator (13) of the circulation valve section (20) bypassing the processor.

5. Hydraulic valve array according to at least one of claims 1 - 4, **characterized in that** the intelligent circulation valve control (µC1) is designed such that it is used at the CAN bus cabling (K) as the central control device (C) for a hydraulic system with the hydraulic valve array.

6. Hydraulic valve array according to at least one of claims 1 - 5, **characterized in that** a circulation valve (21) of the circulation valve section (20) comprises a proportional solenoid as actuator (13).

7. Hydraulic valve array according to claim 6, **characterized in that** the actuator (13) of the circulation valve (21) of the circulation valve section (20) is supplied with current in normal operation, so that the circulation valve supply pressure for consumers connected to the valve sections (S1 - S5, Sx) is forwarded, and that in a state where the actuator (13) is not supplied with current, a spring adjusts the circulation valve (21) such that the circulation valve supply pressure is lead into a reservoir.

8. Hydraulic valve array according to at least one of claims 1 - 7, **characterized in that** the hydraulic valve array furthermore comprises position or pressure sensors (15, 71, 72, 73) connected to the CAN bus cabling (K).

9. Hydraulic valve array according to claim 8, **characterized in that** the position or/and pressure sensors (15, 71, 72, 73) comprise control and/or evaluation sensor electronics (µC1, µC2, µCn) which are connected to the CAN bus cabling (K).

10. Hydraulic valve array according to claim 8 or 9, **characterized in that** the position or/and pressure sensors (15, 71, 72, 73) are directly connected to the intelligent circulation valve control µC1), functionally associated to the circulation valve section (20) or even incorporated in the same.

11. Hydraulic valve array according to at least one of the preceding claims, **characterized in that** as at least one further section (S0) structurally integrated in the valve array, a wireless function control and/or monitoring section is provided and connected with the communication link (B) to the CAN bus cabling (K).

12. Hydraulic valve array according to at least one of claims 1 - 11, **characterized in that** the communication bus cabling (K) comprises at least one cable (60) continuously extending via a housing (11) of the sensor/valve electronics (16) and the intelligent circulation valve control (µC1), that between the cable (60) and the sensor/valve electronics (16) or the intelligent circulation valve control (µC1), a contact link without plug with at least one contact mandrel (80) per wire (26) of the cable (60) force-fit pressed into the cable (60) is provided, that the contact link comprises a cover (40) with a positioning seat (24) for the cable(60) which covers the cable (60) and can be attached onto the housing (11) of the sensor/valve electronics (16) or the intelligent circulation valve control (µC1) by force-fit and pressing, and that the at least one contact mandrel (80) is arranged in at least one socket (17) installed in a passage (23) of the housing (11) of the sensor/valve electronics (16) or the intelligent circulation valve control (µC1) and projects from the housing (11) transversely to the direction of extension of the cable (60) outwards into the positioning seat (24), and is connected in the housing (11) to at least one printed circuit board (19) of the sensor/valve electronics (16) or the intelligent circulation valve control (µC1) attached to the socket (17).

## Revendications

1. Batterie de vannes hydrauliques
comportant plusieurs sections de vanne assemblées de façon modulaire (S1-S5, Sx), dont au moins certaines comportent au moins un système électrique d'actionnement (13) et/ou de détection (15) et au moins un système électronique de commande et/ou d'évaluation (16), et
avec un câblage bus CAN (K) connectant au moins certaines sections de vanne (S1-S5, Sx) à un dispositif de commande centralisé (C) pour la commande et/ou la surveillance des sections de vanne (S1-S5, Sx),
dans laquelle une section de vanne de circulation (20) associée fonctionnellement aux sections de vanne (S1-S5, Sx) est intégrée structurellement dans la batterie de vannes hydrauliques, agencée entre une connexion de pompe (P, PA) et une connexion de retour (R, RA) de la batterie de vannes hydrauliques pour décharger la pression, et pourvue d'une commande de vanne de circulation intelligente (µC1),
dans laquelle la commande de vanne de circulation intelligente (µC1) est connectée au câblage bus CAN (K) via une connexion de communication (B) au moins pour communiquer avec au moins une section de vanne (S1-S5, Sx),
dans laquelle la section de vanne de circulation (20) peut en outre être actionnée avec le câblage bus de communication (K) directement ou via la commande de vanne de circulation intelligente (µC1) indépendamment de la connexion de communication (B), et
dans laquelle la commande de vanne de circulation intelligente (µC1) est agencée de telle sorte qu'elle traite les signaux sur le câblage bus CAN (K) et les utilise pour la commande de la section de vanne de circulation (20).

2. Batterie de vannes hydrauliques selon la revendication 1, **caractérisée en ce que** la commande de vanne de circulation intelligente (µC1) comporte au moins un processeur.

3. Batterie de vannes hydrauliques selon au moins l'une des revendications 1 ou 2, **caractérisée en ce qu'**au moins une des sections de vanne (S1-S5, Sx) est pourvue d'un processeur (µC1, µCn) qui commande une section de vanne (S1-S5, Sx) ou un groupe de sections de vanne (S1-S5, Sx).

4. Batterie de vannes hydrauliques selon au moins l'une des revendications 1 à 3, **caractérisée en ce que** le dispositif de commande centralisé (C) est connecté au câblage bus CAN (K) et **en ce que** la section de vanne de circulation (20) peut également être commandée via la connexion du bus de communication (B) indépendamment de signaux du dispositif de commande centralisé (C), préférablement d'un contrôleur de système ou de pression de service ou d'un interrupteur d'arrêt d'urgence, préférablement via un câblage fixe en dérivation du processeur vers un actionneur (13) de la section de vanne de circulation (20).

5. Batterie de vannes hydrauliques selon au moins l'une des revendications 1 à 4, **caractérisée en ce que** la commande de vanne de circulation intelligente (µC1) est réalisée de telle sorte qu'elle est utilisée sur le câblage bus CAN (K) comme dispositif de commande centralisé (C) pour un système hydraulique avec la batterie de vannes hydrauliques.

6. Batterie de vannes hydrauliques selon au moins l'une des revendications 1 à 5, **caractérisée en ce qu'**une vanne de circulation (21) de la section de vanne de circulation (20) comporte un électroaimant proportionnel comme actionneur (13).

7. Batterie de vannes hydrauliques selon la revendication 6, **caractérisée en ce que** l'actionneur (13) de la vanne de circulation (21) de la section de vanne de circulation (20) est mis sous tension en service normal, de telle sorte que la pression d'alimentation de la vanne de circulation pour des charges connectées aux sections de vanne (S1-S5, Sx) est transmise, et qu'à l'état hors tension de l'actionneur (13), un ressort agit sur la vanne de circulation (21) de telle sorte que la pression d'alimentation de la vanne de circulation est dirigée dans un réservoir.

8. Batterie de vannes hydrauliques selon au moins l'une des revendications 1 à 7, **caractérisée en ce que** la batterie de vannes hydrauliques comporte en outre des capteurs de position ou de pression (15, 71, 72, 73) sur le câblage bus CAN (K).

9. Batterie de vannes hydrauliques selon la revendication 8, **caractérisée en ce que** les capteurs de position et/ou de pression (15, 71, 72, 73) comportent des systèmes électroniques de capteur de commande et/ou d'évaluation (µC1, µC2, µCn) qui sont connectés au câblage bus CAN (K).

10. Batterie de vannes hydrauliques selon la revendication 8 ou 9, **caractérisée en ce que** les capteurs de position et/ou de pression (15, 71, 72, 73) directement connectés à la commande de vanne de circulation intelligente (µC1) sont associés fonctionnellement à la section de vanne de circulation (20) ou même intégrés dans celle-ci.

11. Batterie de vannes hydrauliques selon au moins l'une des revendications précédentes, **caractérisée en ce qu'**une section sans fil de commande fonctionnelle et/ou de contrôle est pourvue comme au moins une autre section (S0) intégrée structurellement dans la batterie de vannes et branchée à la connexion de communication (B) sur le câblage bus CAN (K).

12. Batterie de vannes hydrauliques selon au moins l'une des revendications 1 à 11, **caractérisée en ce que** le câblage bus de communication (K) comporte au moins un câble (60) qui traverse un boîtier (11) du système électronique de capteur/vanne (16) et de la commande de vanne de circulation intelligente (µC1), **en ce qu'**une connexion par contact sans prise avec au moins une broche de contact (80) par conducteur (26) du câble, enfoncée par engagement de force dans le câble (60), est pourvue entre le câble (60) et le système électronique de capteur/vanne (16) ou la commande de vanne de circulation intelligente (µC1), **en ce que** la connexion par contact comporte un couvercle (40) recouvrant le câble (60), sur le boîtier (11) du système électronique de capteur/vanne (16) ou la commande de vanne de circulation intelligente (µC1) applicable par engagement de force et pression, avec un évidemment de positionnement (24) pour le câble (60), et **en ce que** l'au moins une broche de contact (80) est agencée dans au moins un socle (17) installé dans un passage (23) du boîtier (11) du système électronique de capteur/vanne (16) ou de la commande de vanne de circulation intelligente (µC1) et dépasse du boîtier (11) perpendiculairement à la direction de cheminement du câble (60) vers l'extérieur dans l'évidemment de positionnement (24), et est connectée dans le boîtier (11) à au moins un circuit imprimé (19) monté sur le socle (17) du système électronique de capteur/vanne (16) ou de la commande de vanne de circulation intelligente (µC1).
